# EUROPEAN PATENT APPLICATION

(11) **EP 0 719 066 A2**
(43) Date of publication of application: **26.06.1996**
(21) Application number: 95118515.6
(22) Date of filing: 24.11.1995
(51) Int. Cl.: H04Q 11/04, H04L 12/18

(54) **Device and method for the management of multicast calls for broadcast audio and video services in a local ATM node**

(30) Priority: 23.12.1994 IT MI942622
(71) Applicant: ITALTEL SOCIETA ITALIANA TELECOMUNICAZIONI s.p.a., I-20149 Milano (IT)
(72) Inventor: Del Bo Marco, Angelo, I-27100 Pavia (IT); Daolio, Alessandro, I-27039 Sannazzaro de Burgondi (PV) (IT); Daniele, Antonella, I-20010 Bareggio (MI) (IT); Morganti, Michele, I-20133 Milano (IT)
(74) Representative: Giustini, Delio

(57) **Abstract**

A device and a method for the management of multicast calls through broadband ATM network. Said device including a control unit connected to a service bus and to a cell replication unit set up by a plurality of replication units (DM), all of them equal and comprising:
- a central buffer (CELL_BUFFER) for the storage of the ATM cells of which at least one copy has to be made;
- selection means (SEL_TAB) set up by a number of locations equal to the number of customers abutting on the output ATM link;
- a service block (SERVICE_BLOCK) containing data related to the number of ATM cell copies to be transmitted towards the customers abutting on said casting subunit (DM);
- means (SYNC_OUT, CELL_COMPILING) for the addition of virtual path data to the cells stored in said central buffer (CELL_BUFFER).

## Description

### Field of the Invention

The present invention relates in general to a system for the supply of digital audio and video services through broadband ATM (Asynchronous Transfer Mode) networks.

In particular the invention relates to a device and a method for the management of multicast calls for broadcast audio and video services in a local ATM node.

The problem of the distribution of digital audio and video services through switching systems gets more and more actuality and importance especially in consideration on one side of the actually well known limits of analog audio and video transmission via radio or via cable, and on the other hand of the rapid evolution of technologies in the sector of communicationsfield.

In fact the method for the treatment of video signals (coding, compression, storage in a digital way), the high services in terms of capacity, flexibility, efficiency and liability provided by the ATM communication networks, as well as finally the new digital techniques of the DSL type (Digital Subscriber Loop) which make it possible to transmit bandwidth of several MBit/s on the copper twisted pair, enable the development of telecommunication systems able to provide residential subscribers with audio and video services.

In particular the above-mentioned switching systems may enable the subscribers to receive digital broadcast type audio and video services such as TV Broadcast etc.

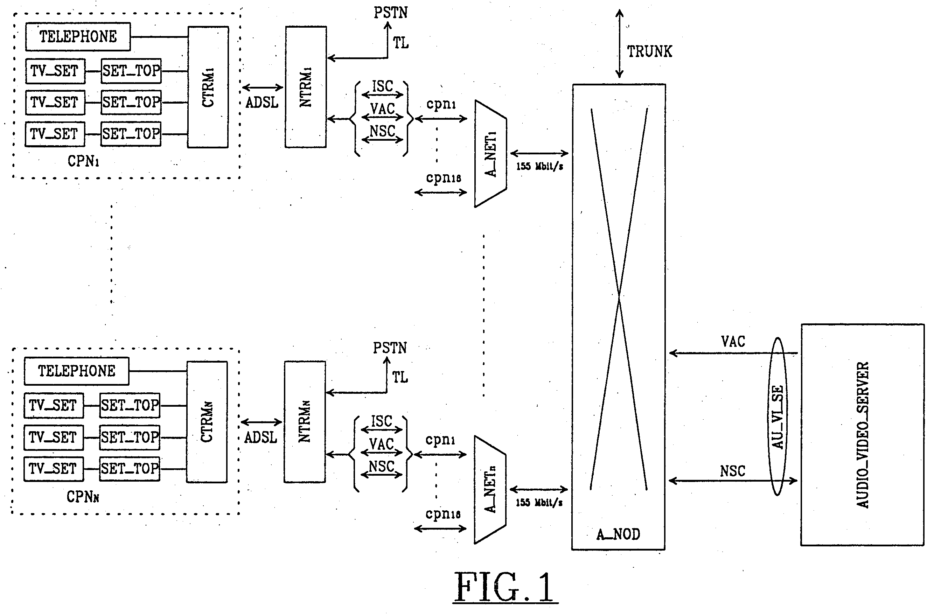

A general diagram of a possible network structure for the supply of digital audio and video services is illustrated in Fig. 1 where the supply of new services integrates itself with traditional services like the telephone service.

With reference to Fig. 1 some networks or subscriber premises CPN1, ...., CPNn (Customer Premises Network) are connected to the telephone network PSTN (Public Switching Telephone Network) as well as to suppliers of broadcast services, AUDIO_VIDEO_SERVER.

Such suppliers of broadcast services may be linked directly or through a backbone ATM system to a local ATM node, A_NOD (ATM_NODE).

Each customer network (CPN) includes a plurality of subscriber equipment, such as TV-SETs, VCR-SETs, HI-FI SETs.

There may be other equipments in the CPN, such as telephone sets, fax, personal cumputers, etc.

The above-mentioned customer equipments abut on connection units SET-TOP carrying out all conversion functions which are necessary for the adaptation of the signals carried by the node A_NOD in signals which are compatible with the different equipments of the CPN network.

Moreover the SET-TOP units carry out all conversion functions which are necessary to transfer to the local node A_NOD all control signals generated by the users of the equipments connected to the unit SET-TOP.

The CPN network is physically connected to the PSTN network and to the ATM network by a copper twisted pair which transmits signals preferably according to the ADSL (Asymmetric Digital Subscriber Loop) technique. The ADSL channel transmits the traditional telephone type signal as well as the data relative to the new audio and video services. As explained hereafter the ADSL technique makes it possible to transmit a data flow of 6 Mbit/s from the node A_NOD towards the customer networks and up to 400 Kbit/s in the opposite direction.

In each one of the subscriber networks the multiplexing (and demultiplexing) of flows arriving (and addressed) from the telephone set TELEPHONE and from the SET-TOP is performed by the termination unit CTRM (Customer TeRMination).

In a dual way the unit CTRM is connected, on the node side A_NOD, to a node termination NTRM (Node TeRMination) routing the flows of the traditional services (telephone, fax) arriving from the CPN towards the network PSTN, and the flows of the broadcast multimedia service connections towards the ATM network. In the opposite direction, towards the CPN network, the same unit NTRM provides for the routing of the flows arriving from the broadcast service providers towards the CPN.

The above-said terminations NTRM are connected to the node A_NOD by means of the access network A_NET (Acess_NET). The networks A_NET may be local or remote ones with respect to the local node A_NOD, and they provide for the multiplexing/demultiplexing of a plurality of data flows having for example a speed of 6 Mbit/s, and to create an information flow presenting for example the speed of 150 Mbit/s to give a high efficiency to the accesses of the local node A_NOD.

In a first approximation the local node A_NOD supplies, regarding the broadcast audio and video services, two types of communication channels between the customer networks CPN and the servers AUDIO_VIDEO_SERVER.

The first one of these channels labelled VAC (Video Audio Channel) is monodirectional and carries the audio and video signals from the AUDIO_VIDEO_SERVER to the CPN networks.

The second one of these channels labelled NSC (Network Signalling Channel) is bidirectional and carries the service data of the network.

In case of broadcast services the audio and video data arriving from the AUDIO_VIDEO_SERVERs are distributed by the local node in the same way towards all customers.

The number of channels which may be simultaneously used by each one of the customer networks CPN depends on the capacity (in terms of bandwidth) of the connection channel.

At present, in the large majority of the cases, the customer networks CPN are connected to the access nodes AN, normally based on optical fibre techniques, through connections based on copper twisted pair.

Thanks to DSL (Digital Subscriber Line) type techniques it turns out to be possible to achieve transmission speeds of several MBit/s on the copper twisted pair.

By the ADSL (Asymmetrical DSL) it is in particular possible to transmit an asymmetrical flow up to a speed of 6 MBit/s from the station to the subscriber and up to a speed of 400 kbit/s in the opposite direction.

With VDSL (Very high bit rate DSL) it is even possible to achieve a speed of 15 Mbit/s from the station to the subscriber.

Thanks to the adoption of such DSL techniques it turns out to be possible to transmit also on the conventional copper twisted pair at an extremely high bit rate, signals such as for example video digital one codified through compression standards MPEG.

As in fact well known the bit rate of the current compression standards MPEG differs from values of 1.5 Mbit/s (VHS) to values of 5 Mbit/s (studio type PAL) and arriving at values of 20 Mbit/s (High Definition).

In the broadcast audio and video services the data traffic passing through the access node AN is much higher in the direction going from the service distributors AUDIO_VIDEO_SERVER to the customer networks with respect to the direction going from the subscribers to the service distributors.

In fact while the service distributors transmit signals at high speed towards the subscribers on the VAC channel (high fidelity sound and full motion video) the subscribers transmit towards the service distributors only short control signals on the NSC channel (for example choice of channels).

The speed of the signals transiting from the downstream side is typically of the range of 6 Mbit/s, while the speed of the signals transiting from the upstream side is lower than 400 Kbit/s.

As the digital audio and video service supply requires the management of data flows characterized by a different bandwidth (from some kbit/s up to some Mbit/s) and with pressing needs in terms of transfer delay and error probability, the ATM technique seems to be actually the most adapted one for the realization of the local node A_NOD.

As in fact known the ATM technique assumes an always more important role especially because it makes it possible to handle the multiplexing and the integrated switching of digital signal flows belonging to services for the transmission of voice, video and data signals with bandwidth requirements different and characteristic for differentiated traffic.

The ATM technique foresees in particular that data related to the different services has to be organized in data units with a fixed length of 424 bits called cells. These cells contain, apart from the specific data, a header carrying among others the data necessary for the routing of the cell itself through the geographic network.

The fact that the cells themselves contain the data required for the definition of the path to go in order to reach their destination, represents numerous advantages in terms of efficiency and flexibility.

Therefore, thanks to these and other characteristics the communication networks based on the ATM technique are especially adapted to operate as support for new broadband services and in particular for digital audio and video services.

However the use of networks in ATM technique presents some problems connected to the management of broadcast type video services (TV Broadcast).

A first big problem is due to the fact that the transmission of audio and video channels in broadcast mode requires necessarily that the ATM connection network offers the possibility to cast and address again cells belonging to a same channel towards all interested subscribers.

For the ATM switching network such operation of multiplexing and re-addressing of cells requires the creation of a multiplicity of cast cells with the same payload of a unique original cell, but with routing informations (headers) completely different from one to the other.

Even if such casting and re-addressing functions are surely implementable within an ATM network, their execution would employ in a very heavy way the resources of the switching network as well as the resources of the control structure linked to this.

This would make not only the management of the broadcast type services very expensive.

A second very important problem arising for the management of the requests of the subscribers is linked to the so-called phenomenon of "zapping", i.e. to the phenomenon of the frequent requests to change the channel by the subscribers who use broadcast audio or video services.

This phenomenon, even if apparently trivial, has certain characteristics suitable to put the control system of a conventional ATM network in a critical situation.

In fact the phenomenon of the "zapping", apart from being very frequent, represents also a significant correlation factor between the signals transmitted by the different subscribers above all in relation to the transmission of programmes of a particular interest.

The simultaneous changing of the channel by a great number of subscribers obliges the control structures of the ATM switching network to face onerous checking operations on the fact that the band of the required channel is or is not compatible with the band available in the network of the subscriber.

These checking operations, considering the speed of the concerned signals, may slow down the operation of changing channel in a not acceptable way for the subscriber.

In fact, as a subscriber network CPN makes it normally possible to have simultaneously a multiplicity of VAC channels, there may arise important problems due to the limitation of the bit rate globally available on the subscriber plug CTRM.

Supposing for example that the bit rate available in a CPN network is of 6 Mbit/s and that a TV transmission at low resolution (1.5 Mbit/s is activated, it will in no way turn out to be possible to satisfy another TV transmission with a higher resolution (5 Mbit/s).

This limitation on the bit rate really available on the subscriber device CTRM involves further complicate checking operations by the control structures on the ATM switching network.

In short, however an ATM network is structurally adapted to support the transport of digital audio and video services of the broadcast type, significant problems will anyhow arise for the traffic management requiring for their solution onerous interventions of strengthening of the connection network, and above all of its control structure.

### Background Art

In the patent application nr. MI94A001552 filed on July 22, 1994 on behalf of the same Applicant, is disclosed a system and a method for the fast management of the connections in a local node based on ATM technique to supply multimedia broadcast and interactive audio and video services to residential subscribers.

A general scheme of a possible structure of a local node for the broadcasting of audio and video services based on the system being the subject of the mentioned patent application is shown in Fig. 2 and comprises substantially:
- an ATM switching network indicated by ATMSF (ATM Switching Fabric);
- a control and local node supervision network indicated by CMN (Control Message Network) which controls through a connection as a whole indicated by cmn all units of the node;
- one or more peripheral modules PMS carrying out interface functions with server devices of audio and video broadcast services (not shown) through connections au_vi_se;
- one or more peripheral modules PMU carrying out interface functions with user devices of broadcast audio and video services (not shown) through connections indicated as a whole by cpn;
- one or more peripheral modules PMT carrying out interface functions with other nodes (not shown) of the ATM network through a connection labelled trunk.

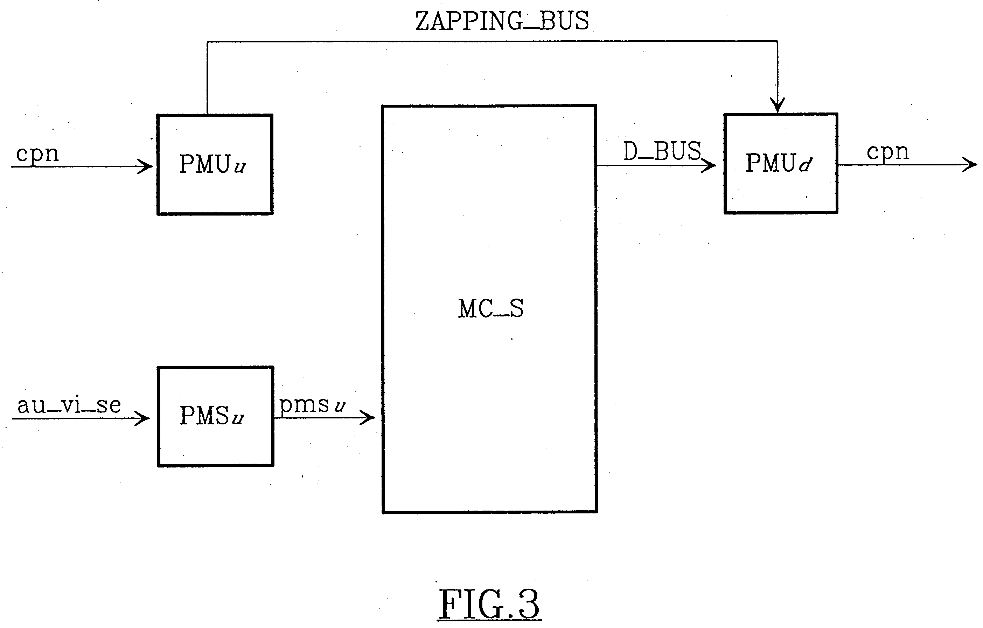

The functional scheme of Fig. 3 shows in a more detailed way the parts of the local node concerning the broadcast audio and video service transmission.

The MC_S (Multicasting_Structure) network represents the part of the switching network ATM-SF concerning services prevailingly of the broadcast type.

Always with reference to Fig. 3 PMS_{U} indicates as a whole the part of the peripheral module PMS which receives the data from the server devices of broadcast audio and video services through the au_vi_se link, and transmits them towards the network MC_S through a pms_{U} link.

According to the system, subject matter of the mentioned patent application, the MC_S network is a passive optical network with a structure which is essentially tree-like. Inside the MC_S network the ATM cells transmitted on one single physical link from the module PMS_{U} are distributed through a physical distribution of the signals (optical splitters) towards all peripheral subscriber modules PMU.

Always with reference to Fig. 3 PMU_{U} as a whole indicates the part of the peripheral module PMU interested in the upstream data flow, and which receives from the different subscriber networks CPN the requests for channel changing by the individual subscribers.

All requests arriving from the subscriber networks CPN abutting on a single peripheral module PMU_{U} are managed inside the module PMU_{U} itself (Fig. 3).

The part of the peripheral module PMU receiving the data from the network MC_S and transmitting it towards the various subscriber networks CPN (downstream flow) has been indicated as a whole by PMU_{D} (Fig. 3).

Thanks to the characteristics of the network MC_S the same output ATM cell flow from the module PMS_{U} reaches all modules PMU (Fig. 3).

According to the system as the subject matter of the mentioned patent application, each one of the modules PMU includes switching and ATM cell replication functionalities. Such functionalities, even if limited, are anyhow sufficient to manage the switching and distribution of the ATM cell flow towards the subscribers connected to that single module PMU.

For a more detailed explanation concerning the structure of the peripheral module PMU see the already mentioned patent application.

This system represents numerous advantages.

Through a similar architecture the characteristics of the ATM technique are exploited completely and with high efficiency.

For the broadcast type services, where the switching functions of the connection network have a relative importance, the part MC_S of the network ATM-SF creates a simple and little onerous distribution at physical level of the signals, requiring to the peripheral modules PMU the control functions of the switching based on the requests made by the subscribers.

The signals transported by the network MC_S being under the form of ATM cells, the switching control functions carried out by the peripheral modules PMU can be carried out by ATM techniques.

Thanks to the fact that these peripheral modules PMU deserve normally a limited number of subscribers (generally each one not more than 4,000), the switching control functions may be carried out with more efficiency compared to analog functions carried out in a centralized way.

But such system requires that inside the peripheral module PMU also ATM cell casting functions are carried out.

### Object of the Invention

It is one object of the present invention to provide a device for the multicast call management for broadcast audio and video services in an ATM type local node, which makes the replication of the ATM cells inside a peripheral subscriber module PMU in function of the requests of channel changing ("zapping") by the subscriber possible.

A second object of the present invention is to provide a method for the multicast call management making it possible, inside a peripheral subscriber module, to supply an efficient digital audio and video service of the broadcast type, even if there are numerous and simultaneous request for channel changing ("zapping") by the subscribers.

### Disclosure of the Invention

These and other objects are achieved through the invention which consists in a device for the multicast call management for broadcast audio and video services in an ATM local node, said device being connected inside a peripheral subscriber interface module of said local node and connected through a plurality of incoming ATM links to a switching network which transports data concerning a plurality of audio and video sessions, and furthermore connected through a plurality of outgoing ATM links to devices using broadcast audio and video services, and also connected to a service bus on which transits service data concerning the requests of session changing by the subscribers, said device being characterized in that it includes a control unit connected to said service bus and a replication unit set up by a plurality of all equal replication subunits, each one of them comprising:
- a central buffer for the storage of the ATM cells of which at least one copy has to be made, said central buffer being connected in input to the ATM links in input and being connected to an output ATM link;
- selection means, set up by a number of location equal to the number of users connected to said output ATM link, each one of said locations containing a session identifier indicating the session currently required by a subscriber and virtual path data concerning the path of the cell in order to reach the subscriber;
- a service block containing data concerning the number of copies of the ATM cells memorised in said central buffer to be transmitted towards the users connected to said cell replication subunit;
- means, connected to said selection table and to said central buffer for the adding of said virtual path data to the cells stored in said central buffer.

### Bried Description of the Drawings

The features of the present invention which are believed to be novel are set forth with particularity in the appended claims. The invention, together with further objects and advantages thereof, may be understood with reference to the following description, taken in conjunction with the accompanying drawings and in which:
Fig. 1, already described, shows the general structure of a communication network for the supply of digital audio and video services;

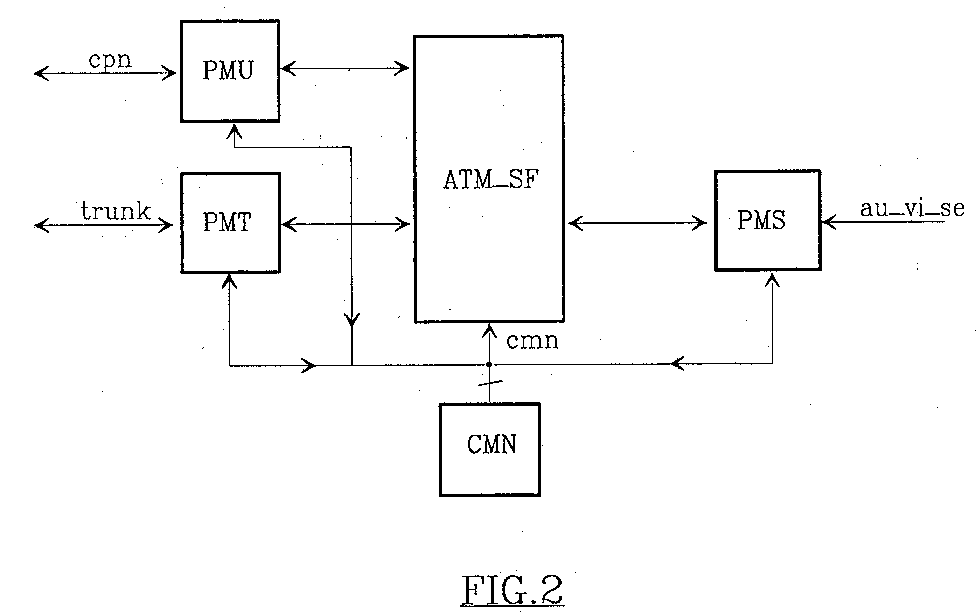

Fig. 2 is a block diagram of the access node A_NOD of Fig. 1 for the broadcast of audio and video services;
Fig. 3 shows in a more detailed way the parts of the access node of Fig. 2 interested in the broadcast type audio and video services;
Fig. 4 shows the general structure of a device for the multicast call management according to the present invention;
Fig. 5 shows the structure of a subunit of the device of Fig. 4;
Fig. 6 shows the structure of the addressing and control tables of the subunit of Fig. 5.

### Detailed Description of a Preferred Embodiment

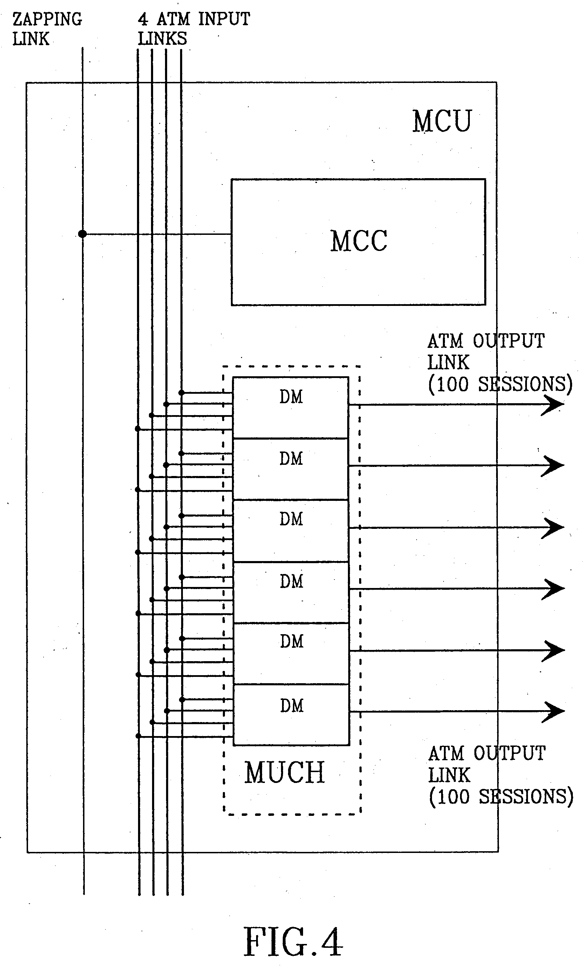

With reference to the alleged Fig. 4 the general structure of a device for the multicast call management according to the invention will now be described, as a whole labelled MCU (Multi Casting Unit).

The devices MCU are arranged inside the peripheral module PMU.

The device MCU includes a control unit MCC (Multi Casting Controller) and a casting unit MUCH (Multi Casting Handler).

The control unit MCC is connected to a bus SIGNALLING/ZAPPING LINK on which transits the service data concerning channel changing requests by the subscribers.

The unit MUCH is connected to a certain number of input ATM links, for example four, indicated by ATM_INPUT_LINK.

The links ATM_INPUT_LINK forward data in an ATM cell standard format or of cells in a proprietary internal format.

Each cell may belong to a different input session within the totality of available input sessions and it is identified by specific values of the fields VPI (Virtual Path Identifier) and VCI (Virtual Channel Identifier) of the cell header.

On configuration of the station to which belongs each element MCU, an association between a certain set of values of the virtual channel identifiers is defined (e.g. 400) and some HEADER fields of the ATM cell of proprietary format. The values of the above-mentioned fields may advantageously coincide with the value of certain fields of the ATM cell in a standard format, for example the VCI and VPI values. Hereafter we will refer to these fields with the input session identification term ISI (Input Session Identifier).

The unit MUCH is moreover connected to a certain number of output ATM links, for example six, labelled ATM_OUTPUT_LINK.

The unit MUCH includes a series of identical subunits which are functionally independent and called DM (Data Manager).

The number of subunits DM is equal to the number of links ATM_OUTPUT_LINK, i.e. in this case six.

Each one of the subunits DM is connected to the input of all links ATM_INPUT_LINK, and presents the output connected to a corresponding link ATM_OUTPUT_LINK.

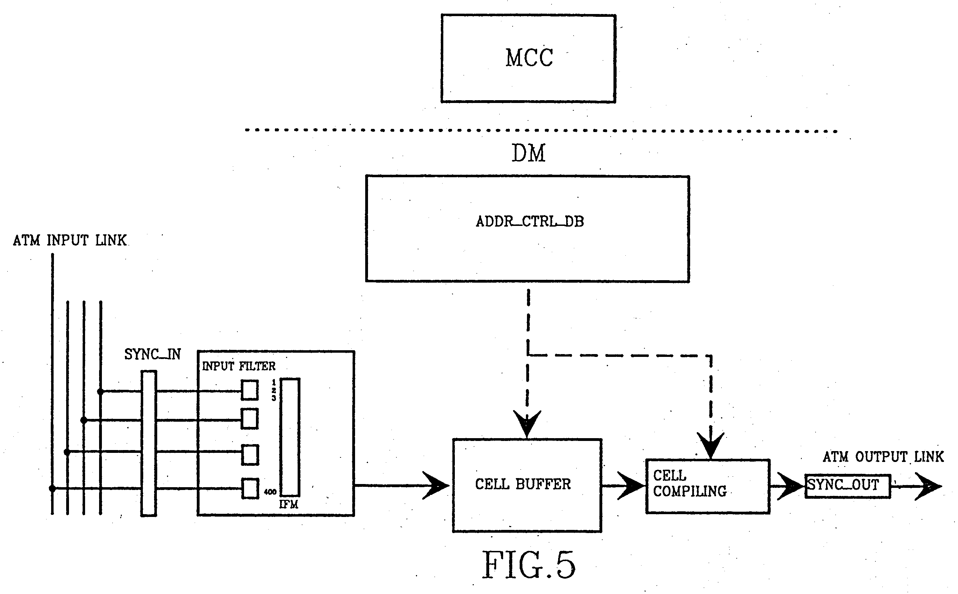

With reference to the enclosed Fig. 5 the general structure of a subunit DM will now be illustrated in a more detailed way.

The subunit DM comprises an input synchronizer block SYNC_IN with its inputs connected to the links ATM_INPUT_LINK and each output connected to a filter unit INPUT_FILTER.

The unit INPUT_FILTER comprises for each one of the links ATM_INPUT_LINK a corresponding filter block.

In this case the number of outputs of the input synchronizer block SYNC_IN and consequently the number of blocks FILTER is equal to four.

The unit INPUT_FILTER comprises also a filter memory IFM (Input Filter Memory) connected to the outputs of the filter blocks FILTER.

Each location of the memory IFM contains a field of the logic type indicating if the corresponding input session is or is not active. A connection is considered active, if at least one subscriber among the subscribers connected to the subunit DM turns out to be linked to this session.

The number of locations of the filter memory IFM is equal to the maximum number of sessions transported by the links ATM_INPUT_LINK, in this case 400.

The output of the unit INPUT_FILTER is also connected to the inputs of a cell buffer called CELL_BUFFER.

The output of the buffer CELL_BUFFER is connected to a cell compiling unit CELL_COMPILING connected to the addressing and control unit (Addressing/Control Data Base) ADDR_CTRL_DB.

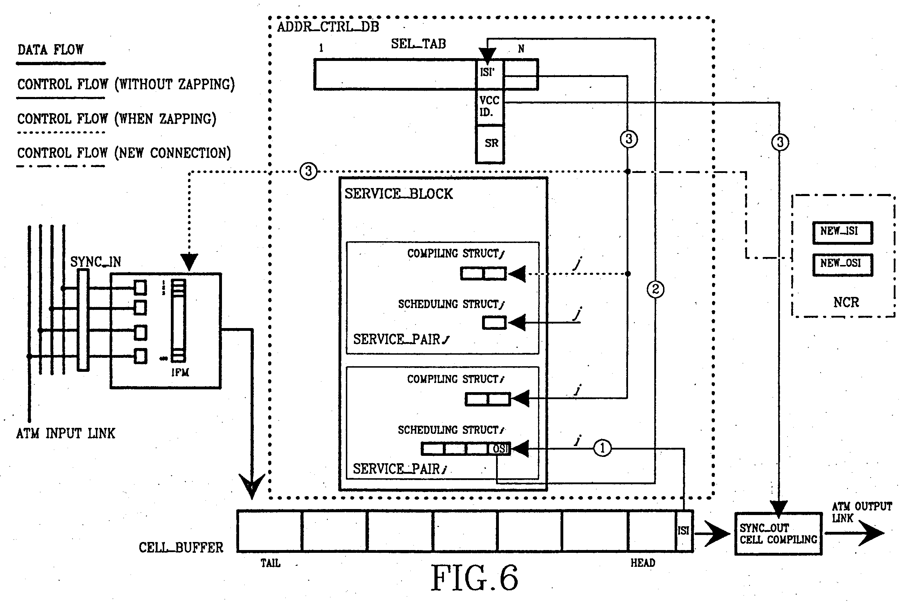

The addressing and control unit ADDR_CTRL_DB is connected to the registers NCR (New Connection Registers) containing the identifiers of the new connected subscriber and the identifier of the chosen session by this subscriber, as will become more understandable hereafter with reference to Fig. 6.

Finally the cell compiling unit is connected to the link ATM_OUTPUT_LINK through an output synchronizer block SYNC_OUT.

The writing and reading of the cells in/from the buffer CELL_BUFFER is preferably carried out by the FIFO method (First In First Out).

All writing operations in the buffer CELL_BUFFER are controlled by the unit INPUT_FILTER.

All reading operations from the buffer CELL_BUFFER are controlled by the addressing and control unit ADDR_CTRL_DB.

The addressing and control unit ADDR_CTRL_DB is also connected to the cell compiling unit CELL_COMPILING.

The addressing and control unit ADDR_CTRL_DB comprises a selection table SEL_TAB shown in details in Fig. 6.

The number of location (lines) of the table SEL_TAB is equal to the maximum number of sessions carried by the link ATM_OUTPUT_LINK, i.e. it is equal to the number of SET_TOPs connected to the specific subunit DM, in this case 100.

Each one of the location of the table SEL_TAB comprises three fields marked by ISI' (Input Session Identifier), VC_ID (Virtual Channel IDentifier) and SR (Session Routing), respectively.

The field ISI' indicates the number of the input session required by the subscriber corresponding to the line of the table SEL_TAB.

The field SR comprises data indicating the virtual path which a cell assigned to be addressed towards the user corresponding to the line of the table SEL_TAB will take.

The field VC_ID comprises data indicating a virtual channel identifier assigned to be inserted in the header of the ATM cells belonging to the virtual channel of the subscriber corresponding to the line of the table SEL_TAB.

The data contained in the field VC_ID are assigned to be used by switching elements downstream of the device MCU to address correctly the cells towards the, subscriber.

The selection table SEL_TAB is addressed through a dynamic addressing block, as a whole indicated by SERVICE_BLOCK set up at its turn by a number of copies of the blocks SERVICE_PAIR equal to the maximum number of sessions carried by the link ATM_INPUT_LINK, in this case 400.

Each pair of blocks SERVICE_PAIRᵢ is set up by a respective scheduling structure marked SCHEDULING_STRUCT and by a respective compiling structure marked COMPILING_STRUCT.

Each position contained in a scheduling or compiling structure of the block SERVICE_BLOCK contains an output identifier OSI (Output Service Identifier) able to identify univocally one of the subscribers connected to the subunit DM.

The scheduling structure SCHEDULING_STRUCT out of the 400 belonging to the block SERVICE_BLOCK is selected by the input session indicator ISI memorised in the header of the cell which is each time present on the HEAD of the FIFO set up by the buffer CELL_BUFFER.

The line of the selection table SEL_TAB is chosen by the value OSI contained in the element present on the head of the scheduling structure selected in this way.

The compiling structure COMPILING_STRUCTᵢ among the 400 belonging to the block SERVICE_BLOCK is selected by the input session indicator contained in the field ISI' of the line of the table SEL_TAB chosen in this way.

The device MCU works as follows.

The unit MCC receives constantly on the bus ZAPPING_BUS the data related to the transmission channels each time chosen by the subscribers deserved by the peripheral module PMU comprising the device MCU under examination.

Each one of these subscribers may freely choose between one or more of the 400 sessions transported by the link ATM_INPUT_LINK.

The input cell flows on the links ATM_INPUT_LINK are synchronized inside of each one of the six subunits DM by the input synchronization block SYNC_IN.

The four filter blocks FILTER eliminate the cells which on the basis of the data stored in the filter memory IFM correspond to sessions not selected by the subunit DM to which those belong.

The filter memory IFM contains, for each one of the 400 input sessions, a logic indication concerning the fact if the corresponding session has been or not selected by at least one subscriber out of the subscribers deserved by the specific subunit DM.

At each subscriber selection the unit MCC provides to update the content of the filter memory IFM.

The number n of copies which have to be made of a single cell may vary between the value zero and the maximum value of sessions carried by the link ATM_OUTPUT_LINK of the specific subunit DM, in this case 100.

A number n equal to 100 would indicate the limit case where all subscribers connected to the link ATM_OUTPUT_LINKn of the specific subunit DM would ask to receive the same transmission channel.

The cells having survived the filtering action realized by means of the blocks FILTER are memorised inside the buffer CELL_BUFFER.

In order to carry out the action of the input synchronizer block SYNC_IN the cells belonging to a same session are memorised inside the buffer CELL_BUFFER in the correct time sequence of arrival.

The buffer CELL_BUFFER is preferably structured like a FIFO.

At each cell time the cell positioned on the Head of the buffer CELL_BUFFER is examined and through the value contained in the identifier ISI of this cell the corresponding structure among the 400 scheduling structures of the block SERVICE_BLOCK is addressed.

In Fig. 6 the identifier contained in such field ISI has been positioned equal to i, and the scheduling structure addressed by this one has been indicated by SCHEDULING_STRUCTᵢ.

By the element positioned on the head of the so selected scheduling structure SCHEDULING_STRUCTᵢ is read the corresponding identifier OSI contained in it.

By means of the identifier OSI a line of the table SEL_TAB is addressed, and from this line are read the values contained in the fields VC_ID and SR, which are supplied to the cell compiling unit CELL_COMPILING.

The unit CELL_COMPILING creates an ATM cell starting, for the creation of the header of this cell, from the values VC_ID, and SR read from the line of the so selected table SEL_TAB, and starting for the creation of the payload of this cell from the cell, which is present on the HEAD of the buffer CELL_BUFFER.

The ATM cell created by the unit CELL_COMPILING is sent to the output synchronizer block SYNC_OUT which then provides for the forwarding of the cell itself towards the output link ATM_OUTPUT_LINK.

From the selected lines of the table SEL_TAB also the value of the field ISI' is read simultaneously to the values of the fields VC_ID and SR.

This field contains the identifier of the session currently selected by the subscriber corresponding to this line of the table SEL_TAB.

By means of this identifier the corresponding structure out of the 400 compiling structures of the address and control unit ADDR_CTRL_DB is addressed.

In case the subscriber has not carried out any channel changing, the indicator read in the field ISI corresponds to the preceding indicator ISI read in the cell, and consequently the compiling structure addressed by this one belongs to the same structure pair SERVICE_PAIR, to which belongs the previously selected scheduling structure SCHEDULING_STRUCTUREᵢ.

Inside the so addressed structure COMPILING_STRUCT the corresponding identifier OSI is written, and the cycle starts again with the reading of the new identifier OSI contained in the following element positioned on the head HEAD of the structure SCHEDULING_STRUCTᵢ.

The cycle continues until the end of the present scheduling structure SCHEDULING_STRUCTᵢ has not been achieved.

According to the invention, once the end of the scheduling structure SCHEDULING_STRUCTᵢ has been reached, the compiling structure COMPILING_STRUCTᵢ and the scheduling structure SCHEDULING_STRUCTᵢ are exchanged one by the other.

Simultaneously the cell currently positioned on the HEAD of the buffer CELL_BUFFER is rejected and the following cell is carried on the HEAD of the buffer itself.

At the moment of the channel zapping request by an already active subscriber, the control unit MCC updates advantageously the content of the filtering memory IFM.

At the same time the control unit MCC updates the value of the field ISI' of the table SEL_TAB in the position corresponding to the subscriber having made the zapping signaling.

In this way, when such line of the table SEL_TAB is addressed by one of the values read by the scheduling structure SCHEDULING_STRUCTᵢ, the identifier corresponding to the new session j just selected by the subscriber is read by the field ISI'. In fig. 6 the identifier contained in the field ISI' of the selected line is put equal to j.

By means of this value j is addressed a compiling structure out of the 400 compiling structures of the block SERVICE_BLOCK not belonging to the pair SERVICE_PAIR to which belongs the previously selected scheduling stack.

In Fig. 6 the compiling structure addressed by the value j after the channel changing has been indicated by COMPILING_STRUCTⱼ.

Inside the structure COMPILING_STRUCTⱼ is written the corresponding identifier OSI, and the cycle proceeds as in the previous case (i.e. in absence of zapping) with the reading of the new identifier OSI contained in the following element positioned on the HEAD of the structure SCHEDULING_STRUCTᵢ addressed by the value ISI of the cell present on the HEAD of the buffer CELL_BUFFER.

The cycle proceeds as in the previous case (in absence of zapping) until the moment when the end of the present scheduling structure SCHEDULING_STRUCTi is reached.

Like in the previous case once the end of the scheduling structure SCHEDULING_STRUCTᵢ has been reached, the compiling structure COMPILING_STRUCTi and the scheduling structure SCHEDULING_STRUCTi are exchanged one by the other.

At the moment of a connection request by a subscriber not yet active, the control unit MCC updates, on the basis of the session required by the subscriber at the moment of the connection, the content of the filtering memory IFM.

At the same time the control unit MCC updates the value of the field SEL_TAB_ISI of the table SEL_TAB in the position corresponding to the subscriber having made the connection request.

Moreover the control block MCC inserts in the register NCR
a new element containing the identifier of the new subscriber and the session identifier required by this new subscriber.

Through this new element the corresponding compiling structure COMPILING_STRUCT is addressed in which the identifier of the new subscriber is written.

The whole block SERVICE_BLOCK may be implemented in an advantageous way through a single memory unit RAM shared by all scheduling and compiling structures.

In this way it turns out to be possible to obtain a significant reduction of the memory capacity required as a whole with respect to that theoretically necessary to realize the block SERVICE_BLOCK.

It is possible to appreciate the fact that the buffer CELL_BUFFER in this way makes it possible to decouple the speeds of the data flows transiting on the input links ATM_INPUT_LINK from the speed of the data flows transmitted by the output links ATM_OUTPUT_LINK independently from the bit rate of such flows.

The compiling and scheduling structures COMPILING_STRUCT and SCHEDULING_STRUCT may be implemented with a whatsoever generic data structure. As a not limiting example, such structures may be advantageously implemented through stack structures operating in LIFO mode (Last In First Out).

Such structures may alternatively be implemented through structures operating in FIFO mode (First In First Out).

While a particular embodiment of the present invention has been shown and described, it should be understood that the present invention is not limited thereto since other embodiments may be made by those skilled in the art without departing from the true spirit and scope thereof. It is thus contemplated that the present invention encompasses any and all such embodiments covered by the following claims.

## Claims

1. Device for the multicast call management for broadcast audio and video services in an ATM node, said device (MCU) being connected inside a peripheral subscriber interface module (PMU) of said local node (A_NOD), and connected through a plurality of incoming ATM links (ATM_INPUT_LINK) to a switching network (ATM-SF) which transports data concerning a plurality of audio and video sessions, and furthermore connected through a plurality of outgoing ATM links (ATM_OUTPUT_LINK) to devices using broadcast audio and video services, and also connected to a service bus (ZAPPING_BUS) on which transits service data concerning the requests of session changing by the subscribers,
said device (MCU) being characterized in that it includes a control unit (MCC) connected to said service bus (ZAPPING_BUS), and a replication unit (MUCH) set up by a plurality of all equal replication subunits (DM), each one of them comprising:
- a central buffer (CELL_BUFFER) for the storage of the ATM cells of which at least one copy has to be made, said central buffer (CELL_BUFFER) being connected in input to the ATM links in input (ATM_INPUT_LINK) and being connected to an ATM output link (ATM_OUTPUT_LINK);
- selection means (SEL_TAB) set up by a number of locations equal to the number of users connected to said output ATM link, each one of said locations containing a session identifier (ISI') indicating the session currently required by a subscriber and virtual path data concerning the path of the cells in order to reach the subscriber;
- a service block (SERVICE_BLOCK) containing data (SCHEDULING_STRUCT, CCOMPILING_STRUCT, OSI) concerning the number of copies of the ATM cell memorised in said central buffer (CELL_BUFFER) to be transmitted towards the users connected to said cell replication subunit (DM);
- means (CELL_COMPILING), connected to said selection table (SEL_TAB) and to said central buffer (CELL_BUFFER), for the adding of said virtual path data (SR) to the cells stored in said central buffer (CELL_BUFFER).

2. Device according to claim 1, characterized in that said service block (SERVICE_BLOCK) comprises a number of scheduling structures (SCHEDULING_STRUCT) equal to the number of sessions carried by said ATM input links (ATM_INPUT_LINK), each one of said scheduling structures (SCHEDULING_STRUCT) being addressed by a session identifier (ISI) present in the cell which is each time present on the head (HEAD) of said central buffer (CELL_BUFFER), each one of said scheduling structures (SCHEDULING_STRUCTi) including subscriber identifiers (OSI), each one of them indicating univocally a subscriber, out of the subscribers abutting on said replication subunit (DM), towards which said ATM cell each time present on top of said central buffer (CELL_BUFFER) has to be transferred, and that said service block (SERVICE_BLOCK) comprises means to update the content of said scheduling structure (SCHEDULING_STRUCTi) eliminating a subscriber identifier (OSI) each time said cell being present each time on the head of said central buffer (CELL_BUFFER) is transferred towards the subscriber.

3. Device according to claim 2, characterized in that said service block (SERVICE_BLOCK) comprises a number of compiling structures (COMPILING_STRUCT) equal to the number of sessions carried by said ATM input links (ATM_INPUT_LINK), each one of said compiling structures (COMPILING STRUCTi) being addressed by a session identifier (ISI') included in the location of said selection table (SEL_TAB) each time addressed by a session identifier (OSI) present in the scheduling structure (SCHEDULING_STRUCTi) addressed by said session identifier (ISI) present in said cell which is present on the head of said central buffer (CELL_BUFFER), and that said service block (SERVICE_BLOCK) includes means to update the content of said compiling structure (COMPILING_STRUCTi) adding a subscriber identifier (OSI) each time said cell each time present on the head of said central buffer (CELL_BUFFER) is transmitted towards the subscriber, and means to exchange, each time said scheduling structure (SCHEDULING_STRUCTi) remains empty, the content of said scheduling structure (SCHEDULING_STRUCTi) with the content of said compiling structure (COMPILING_STRUCTi).

4. Device according to claim 2, characterized in that said scheduling structures (SCHEDULING STRUCT) are stack structures operating in LIFO mode (Last In First Out).

5. Device according to claim 3, characterized in that said compiling structures (COMPILING_STRUCT) are stack structures operating in LIFO mode (Last In First Out).

6. Device according to claim 2, characterized in that said scheduling structures (SCHEDULING_STRUCT) are structures operating in FIFO mode (First In First Out).

7. Device according to claim 3, characterized in that, said compiling structures (COMPILING_STRUCT) are structures operating in FIFO mode (First In First Out).

8. Device according to claims 2 and 3, characterized in that said scheduling structures (SCHEDULING_STRUCT) and said compiling structures (COMPILING_STRUCT) are implemented by using a single RAM memory unit.

9. Device according to claim 1, characterized in that said casting subunit (DM) includes an input filter unit (INPUT_FILTER) preventing the storage inside said central buffer (CELL_BUFFER) of all ATM cells transiting on said ATM input links (ATM_INPUT_LINK) belonging to sessions which are not required by any subscriber abutting on said casting subunit (DM).

10. Device according to claim 9, characterized in that said input filter unit (INPUT_FILTER) comprises, for each link out of said ATM input links (ATM_INPUT_LINK) a corresponding filter block (FILTER).

11. Device according to claim 9, characterized in that said input filter unit (INPUT_FILTER) comprises a filter memory (IFM) composed by a number of locations equal to the number of sessions carried by said ATM input links (ATM_INPUT_LINK), each one of said locations containing data concerning the number of subscribers abutting on said casting subunit (DM) who are asking for a specific session out of the sessions carried by said ATM input links (ATM_INPUT_LINK).

12. Device according to claim 11, characterized in that said data contained in each location of said filter memory (IFM) is set up by a single bit indicating the fact that at least one out of the subscribers abutting on said casting subunit (DM) is requiring or not a specific session out of the sessions carried by said ATM input links (ATM_INPUT_LINK).

13. Device according to claim 1, characterized in that each one of said casting subunits (DM) includes an input synchronizer block (SYNC_IN) which synchronizes the data flows transiting on said ATM input links (ATM_INPUT_LINK).

14. Device according to claim 1, characterized in that each one of said casting subunits (DM) comprises an output synchronizer block (SYNC_OUT) which synchronizes the data flows transmitted on said ATM output link (ATM_OUTPUT_LINK).

15. Method for the management of multicast calls for broadcast audio and video services in a local ATM type node inside a peripheral subscriber interface module (PMU) of said local node (A_NOD) for the casting and addressing of ATM cells belonging to a plurality of audio and video user sessions of broadcast audio and video services, said ATM cells being carried (ATM_INPUT_LINK) through an ATM switching network (ATM-SF),
characterized in that it includes the step to memorize the ATM cells arriving from said ATM switching network (ATM-SF) inside a central buffer (CELL_BUFFER) operating in FIFO mode; and in that it comprises the following steps for each one of the ATM cells present on the head of said central buffer (CELL_BUFFER):
- extracting identifications (OSI) of the subscribers towards which said ATM cell has to be transferred;
- extracting data about the virtual path (SR) concerning the path of the cell to reach each subscriber;
- creating for each subscriber to whom said ATM cell has to be transferred a copy of said ATM cell adding the virtual path data (SR) corresponding to this subscriber.

16. Method according to claim 15, characterized in that it includes the step of associating a set of virtual channel identifier values (VC) to a set of input session identifiers ISI (Input Session Identifier), and of creating a number of scheduling structures (SCHEDULING_STRUCT) equal to the number of sessions carried (ATM_INPUT_LINK) by said ATM switching network (ATM-SF), and by the fact that it comprises the following steps for each ATM cell present on the head of said central buffer (CELL_BUFFER):
- identifying through a session identifier (ISI) extracted from the virtual channel data (VC) present in said ATM cell and from said virtual channel identifier values (VC) and from said input session identifiers ISI (Input Session Identifier) a scheduling structure (SCHEDULING_STRUCTi) out of said scheduling structures;
- identifying for each element of said scheduling structure (SCHEDULING_STRUCTi), through a subscriber identifier (OSI) contained in said element, a subscriber towards which said ATM cell is to be transferred, and extract (SEL_TAB) the corresponding virtual path data related to the path of the cell to reach each one of the subscribers;
- adding (CELL_COMPILING) said virtual path data (SR) to said ATM cell, and eliminating said element from said scheduling structure (SCHEDULING_STRUCTi).

17. Method according to claim 16, characterized in that it includes the step of creating a number of compiling structures (COMPILING_STRUCT) equal to the number of sessions carried (ATM_INPUT_LINK) by said ATM switching network (ATM-SF), and in that is comprises the following steps for each ATM cell present on the head of said central buffer (CELL_BUFFER) and for each subscriber identifier (OSI) extracted from said scheduling structure (SCHEDULING_STRUCTi):
- identifying a compiling structure (COMPILING_STRUCT) out of said compiling structures through a session identifier (ISI') addressed by said subscriber identifier (OSI) extracted from said scheduling structure (SCHEDULING_STRUCTi);
- adding an element identified by said subscriber identifier (OSI) to said compiling structure (COMPILING_STRUCT); and
- exchanging, each time said scheduling structure (SCHEDULING_STRUCTi) remains empty, the content of said scheduling structure (SCHEDULING_STRUCTi) with the content of the compiling structure (COMPILING_STRUCTi) identified by the same session identifier (ISI).

18. Method according to claim 15, characterized in that when a subscriber sends a channel changing request, it foresees moreover the following steps:
- modifying the session identifier (ISI') addressed by the subscriber identifier (OSI) corresponding to the subscriber who has made a channel changing request;
- addressing in response to the extraction of said subscriber identifier (OSI) by a scheduling structure (SCHEDULING_STRUCT) a compiling structure (COMPILING_STRUCT) by making use of the session identifier (ISI') read from the selection table (SELL_TAB) in correspondence of the memory location corresponding to said subscriber identifier (OSI);
- writing inside the so addressed compiling structure (COMPILING_STRUCT) the identifier of the subscriber (OSI) having made a channel changing request.

19. Method according to claim 15, characterized in that it comprises the step of eliminating in input the ATM cells belonging to sessions which are not required by any subscriber.

20. Method according to claim 15, characterized in that it comprises the step of synchronizing (SYNC_IN) in input the ATM cells arriving from said ATM switching network (ATM-SF).

21. Method according to claim 15, characterized in that it comprises the step of synchronising in output (SYNC_OUT) the ATM cells transmitted towards the subscribers.
